# EUROPEAN PATENT SPECIFICATION

(11) **EP 0 409 796 B1**
(45) Date of publication and mention of the grant of the patent: **20.01.1993**
(21) Application number: 90830114.6
(22) Date of filing: 20.03.1990
(51) Int. Cl.: A01B 59/043

(54) **An automatically-engageable hook for hitching equipment or implements to a tractor**
Automatische Fanghaken zur Kupplung von Geräten an einen Traktor
Crochet automatique d'attelage pour le raccord d'outil à un tracteur

(30) Priority: 19.07.1989 IT 6761189
(43) Date of publication of application: 23.01.1991
(73) Proprietor: SAME S.p.A., I-20047 Treviglio Bergamo (IT)
(72) Inventor: Rivoltella, Martino, I-24047 Treviglio (Bergamo) (IT)
(74) Representative: Bosotti, Luciano

(56) References cited:
- DE-A- 1 557 848
- DE-A- 2 749 311
- DE-A- 3 527 774
- FR-A- 2 170 054
- US-A- 2 904 116

## Description

The present invention relates to automatically-engageable hooks for hitching agricultural implements or equipment to agricultural, industrial or garden tractors.

More particularly, the invention relates to a hook of the type comprising a body defining a substantially-hemispherical open seat for housing a spherical coupling member carried by a piece of equipment or an implement, a closure member articulated about a transverse pin carried by the top of the base part of the hook for pivoting about the transverse pin between a raised position for retaining the spherical coupling member in the hemispherical seat and a lowered release position in which the spherical coupling member can be released from the hemispherical seat, biassing means for urging the closure member towards the raised retaining position, and remotely-operable actuator means for moving the closure member from its raised retaining position to its lowered release position against the action of the resilient biassing means.

In known hooks of the type defined above (see, for example, EP-A-187733) the actuator means are normally constituted by kinematic mechanisms which are structurally complex and expensive and are neither very efficient nor reliable, particularly in view of the difficult working and environmental conditions in which agricultural tractors operate.

According to FR-A-2170054 the actuator means comprise a pressurised fluid jack, which is placed rearwardly to the hook and below the supporting arm thereof. This construction, besides being complicated, involves the risk of damage and failure of the jack.

The object of the present invention is to avoid the above problems and to provide a hook of the type defined at the beginning, which is simple and cheap to produce and has increased reliability and improved safety in use.

According to the invention, this object is achieved by virtue of the fact that the actuator means are constituted by a pressurised-fluid jack, that the cylinder of the pressurised-fluid jack is constituted by a cavity formed in the base part of the hook beside the articulation pin of the closure member and a piston with a substantially hemispherical top which bears against the closure member is sealingly slidable in the cylinder.

According to another aspect of the invention, the closure member has an external projection for operation by hand.

The invention will now be described in detail with reference to the appended drawings, provided purely by way of non-limiting example, in which:
Figure 1 is a schematic perspective view of a hook according to the invention, and
Figure 2 is a longitudinal section taken on the line II-II of Figure 1.

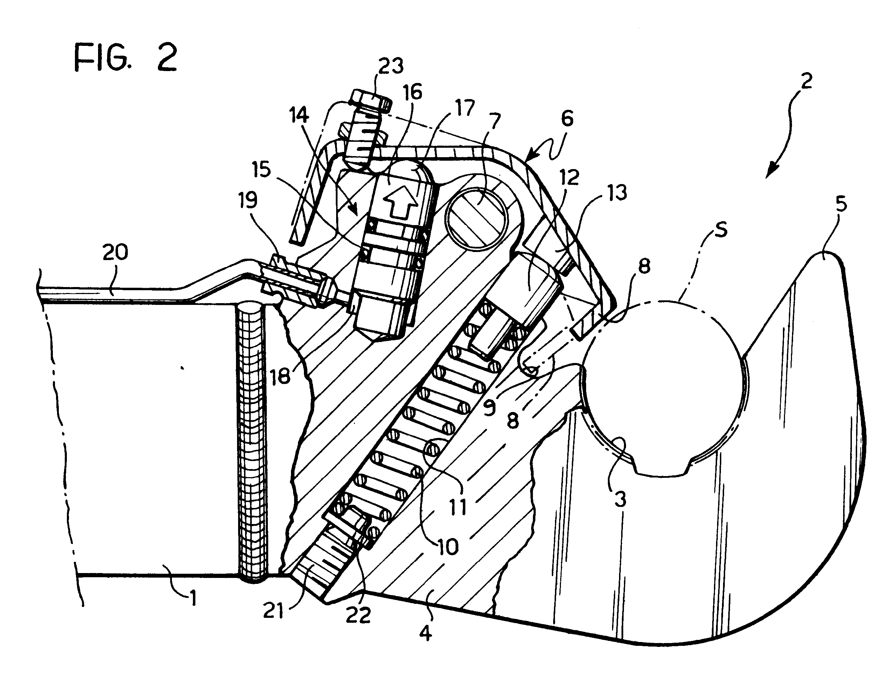

With reference to the drawings, an arm of a three-point linkage of a tractor is indicated 1 and a hook 2 according to the invention is fixed rigidly to its free end for accommodating, in a conventional manner, a spherical coupling member carried by a bar or by a piece of equipment or an agricultural implement which is intended to be connected to the three-point linkage. In Figure 2, the spherical coupling member, indicated S, is shown in broken outline in its configuration of engagement in the hook 2.

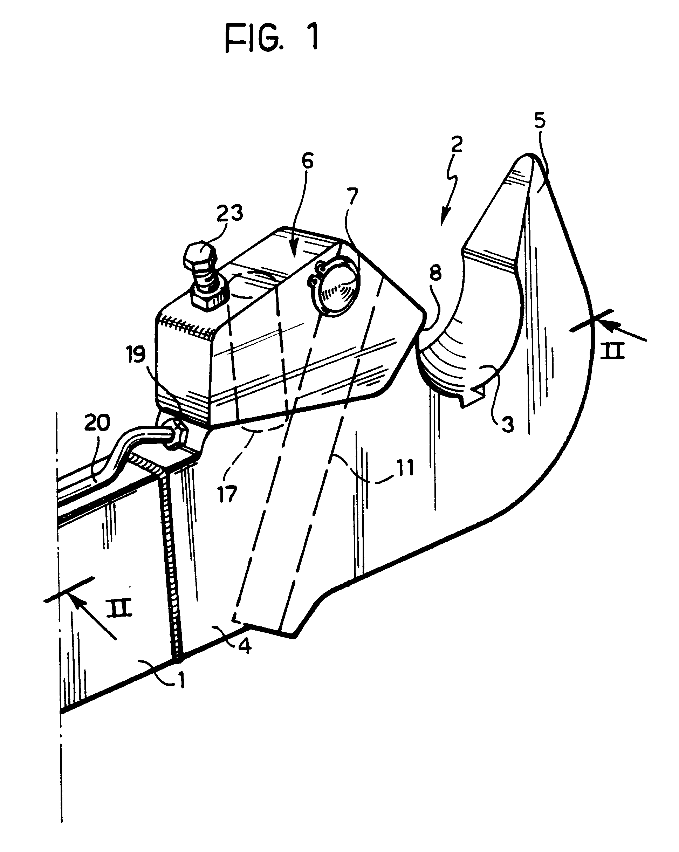

The hook 2 is formed with an upwardly-open, substantially-hemispherical seat 3 interposed between a base part 4 connected to the arm 1 and a tooth-like end part 5. A substantially cap-shaped closure member, indicated 6, is articulated about a transverse pin 7 carried by the top of the base part 4 so as to be pivotable between a raised position, shown in Figure 1 and in continuous outline in Figure 2, and a lowered position, shown in broken outline in Figure 2. The closure member 6 has a bent frontal end 8 which, when the member 6 is in the raised position, prevents the release of the coupling member S from the hemispherical seat 3 and, when the closure member 6 is in the lowered position, is inserted in a recess 9 in the base part 4, enabling the spherical member S to be released from the hemisherical seat 3. The raised and lowered positions of the closure member 6 will hereinafter be called the "retaining position" and the "release position" respectively.

The closure member 6 is normally kept in the retaining position by the action of a helical compression spring 10 housed in a hole 11 in the base part 4 and urging a generally cylindrical abutment element 12 upwardly against an internal block 13 of the closure member 6.

The abutment element 12 and the spring 11 enable the spherical coupling member S to be inserted and locked automatically in the hemispherical seat 3: in fact, when it is inserted, the spherical member S pushes against the front end of the closure member 6, causing it to pivot from its retaining position to its release position against the action of the spring 10. After the spherical member S is housed in the seat 3, the spring 10 causes the closure member 6 to return to its retaining position so as to prevent the removal of the spherical member S until the closure member 6 is pivoted to the release position again.

In order to cause this pivoting, the invention provides for a servo-assisted actuator which is operable remotely, that is, from the driving position of the tractor, and is constituted by a single-acting hydraulic jack 14. In the embodiment shown in the drawings, the hydraulic jack 14 comprises a cylinder 15 which is constituted by a cavity formed directly in the base part 4 of the hook 2, on the opposite side of the articulation pin 7 from the abutment element 12, and in which a piston 16 is sealingly slidable. The piston 16 has a substantially spherical top 17 which projects from the cylinder 15 and abuts the internal wall of the closure member 6.

The thrust chamber of the cylinder 15, indicated 18, is connected by a connector 19 and a pipe 20 to a supply pump installed on the tractor. The supply of the pressurised hydraulic fluid to the chamber 18, and hence the operation of the jack 14, is achieved normally by means of a conventional three-way distributor (not shown) which can be operated, as stated, from the driving position of the tractor. The piston 16 is thus advanced and the corresponding bearing region of the closure member 6 is consequently thrust upwardly, causing the closure member to pivot about its articulation pin 7 so as to place the end 8 in the recess 9 and thus enable the spherical coupling member S to be removed from the hemispherical seat 3.

In the absence of a supply to the thrust chamber 18, the action of the thrust spring 10 keeps the closure member 6 in the raised retaining position.

The loading of the spring 10 can be adjusted by the operation of a screw 21 carrying a support 22 against which the opposite end of the spring 10 from the abutment member 12 reacts.

According to an alternative embodiment, the hydraulic jack 14 may be arranged in an opposite configuration, in which the cylinder 15 is formed with the closure member 6 and the piston 16 reacts against the base part 4 of the hook 2.

As clearly shown in the drawings, the closure member 6 has a generally cap-shaped conformation and surrounds the top of the base part 4 of the hook 2: as well as ensuring the necessary structural strength for supporting the loads and stresses imparted to the member by the spherical coupling member S as a result of the jolting of the equipment or implement in use, this shape also ensures effective and complete protection of the elements (the spring 10, the abutment member 12, the hydraulic jack 14) incorporated in the hook 2.

In order to enable easy manual operation of the closure member 6 in the event of an absence of an hydraulic supply to the jack 14, a screw-gripping projection 23 is provided and is engaged in the opposite end of the member 6 from the terminal appendage 8. The screw 23 also acts as an adjustable stop for the pivoting of the closure member 6 from its lowered release position to its raised retaining position.

## Claims

1. An automatically-engageable hook (2) for hitching equipment or implements to an agricultural tractor, comprising a body defining an upwardly-open, substantially-hemispherical seat (3) for housing a spherical coupling member (S) carried by a piece of equipment or an implement, a closure member (6) articulated about a transverse pin (7) carried by the top of the base part (4) of the hook (2) for pivoting about the transverse pin (7) between a raised position for retaining the spherical coupling member (S) in the hemispherical seat (3) and a lowered release position in which the spherical coupling member (S) can be released from the hemispherical seat (3), resilient biassing means (10,11,12) for urging the closure member (6) towards the raised retaining position, and remotely-operable actuator means (14,15,16,17) for moving the closure member (6) from its raised retaining position to its lowered release position against the action of the resilient biassing means (10,11,12), characterised in that the actuator means are constituted by a pressurised-fluid jack (14), in that the cylinder (15) of the jack (14) is constituted by a cavity formed in the base part (4) of the hook (2) beside the articulation pin (7) of the closure member (6), and in that a piston (16) with a substantially hemispherical top (17) which bears against the closure member (6) is sealingly slidable in the cylinder (15).

2. A hook according to Claim 1, characterised in that the closure member (6) has an external projection (23) for operation by hand.

3. A hook according to Claim 1, characterised in that the pressurised-fluid jack is a single-acting hydraulic jack (14) whose cylinder (15) is connected to a hydraulic supply-source of the tractor.

## Patentansprüche

1. Automatisch kuppelnder Haken (2), um Geräte oder Zubehör an einen landwirtschaftlichen Traktor anzuhängen, wobei der Haken einen Körper, der einen nach oben offenen, im wesentlichen halbkugelförmigen Sitz (3) bildet, um ein kugelförmiges Kupplungselement (5) aufzunehmen, das von einem Teil eines Zubehörs oder eines Geräts getragen wird, ein Verschlußelement (6), das um einen Querzapfen (7) gelenkig ist, der von der Oberseite des Basisteils (4) des Hakens (2) getragen wird, um sich um den Querzapfen (7) zwischen einer angehobenen Stellung, um das kugelförmige Kupplungselement (5) im halbkugelförmigen Sitz (3) zurückzuhalten, sowie einer abgesenkten Freigabestellung zu verschwenken, in der das kugelförmige Kupplungselement (5) vom halbkugelförmigen Sitz (3) freigegeben werden kann, eine elastische Vorspannungseinrichtung (10, 11, 12), um das Verschlußelement (6) zur angehobenen Haltestellung zu drücken, sowie eine fernsteuerbare Betätigungseinrichtung (14, 15, 16, 17) besitzt, um das Verschlußelement (6) von seiner angehobenen Haltestellung in seine abgesenkte Freigabestellung gegen die Wirkung der elastischen Vorspannungseinrichtung (10, 11, 12) zu bewegen, dadurch gekennzeichnet, daß die Betätigungseinrichtung von einem Hydraulikkolben (14) gebildet wird, wobei der Zylinder (15) des Kolbens (14) von einem Hohlraum gebildet wird, der im Basisteil (4) des Hakens (2) neben dem Gelenkszapfen (7) des Verschlußelements (6) ausgebildet ist, und daß ein Kolben (16) mit einem im wesentlichen kugelförmigen Oberteil (17), der auf dem Verschlußelement (6) liegt, im Zylinder (15) abgedichtet verschiebbar ist.

2. Haken gemäß Anspruch 1, dadurch gekennzeichnet, daß das Verschlußelement (6) einen externen Vorsprung (23) besitzt, um es händisch zu betätigen.

3. Haken gemäß Anspruch 1, dadurch gekennzeichnet, daß der Hydraulikkolben ein einfachwirkender Hydraulikkolben (14) ist, dessen Zylinder (15) mit einer Hydraulikquelle des Traktors verbunden ist.

## Revendications

1. Crochet à accrochage automatique (2) pour l'attelage d'outillage ou d'instruments à un tracteur agricole, comprenant un corps délimitant un siège (3) sensiblement hémisphérique ouvert vers le haut destiné à recevoir un organe (S) sphérique d'accouplement porté par un élément d'outillage ou un instrument, un organe de fermeture (6) articulé autour d'un axe transversal (7) disposé sur le dessus de la partie de base (4) du crochet (2), afin de pivoter autour de l'axe transversal (7) entre une position haute pour retenir l'organe sphérique d'accouplement (S) dans le siège hémisphérique (3), et une position de libération basse dans laquelle l'organe sphérique d'accouplement (S) peut être libéré du siège hémisphérique (3), un dispositif de sollicitation élastique (10, 11, 12) pour solliciter l'organe de fermeture (6) vers la position haute de retenue, et un dispositif d'actionnement actionné à distance (14, 15, 16, 17) pour déplacer l'organe de fermeture (6) depuis sa position haute de retenue, vers sa position basse de libération, à l'encontre de l'action du dispositif de sollicitation élastique (10, 11, 12), caractérisé en ce que le dispositif d'actionnement est constitué par un vérin (14) à fluide sous pression, en ce que le cylindre (15) du vérin (14) est constitué par une cavité formée dans la partie de base (4) du crochet (2) à côté de l'axe d'articulation (7) de l'organe de fermeture (6), et en ce qu'un piston (16) ayant un dessus à peu près hémisphérique (17) qui prend appui contre l'organe de fermeture (6) coulisse de façon étanche dans le cylindre (15).

2. Crochet suivant la revendication 1, caractérisé en ce que l'organe de fermeture (6) comporte une saillie externe (23) afin de permettre un actionnement manuel.

3. Crochet suivant la revendication 1, caractérisé en ce que le vérin à fluide sous pression est un vérin hydraulique à simple effet (14) dont le cylindre (15) est relié à une source d'alimentation en fluide hydraulique du tracteur.
